# EUROPEAN PATENT APPLICATION

(11) **EP 3 879 395 A1**
(43) Date of publication of application: **15.09.2021**
(21) Application number: 21157259.9
(22) Date of filing: 16.02.2021
(51) Int. Cl.: G06F 8/38, G05B 19/00, G06F 9/451, G06T 7/12, G06T 7/13

(54) **EXTRACTION OF GRAPHICAL OBJECTS FROM PIPING AND INSTRUMENTATION DIAGRAMS FOR USE IN A HUMAN-MACHINE INTERFACE**

(30) Priority: 10.03.2020 US 202016814703
(71) Applicant: Rockwell Automation Technologies, Inc., Mayfield Heights, OH 44124-6188 (US)
(72) Inventor: MABOTE, Itumeleng, Mayfield Heights, OH 44124 (US)
(74) Representative: Grünecker Patent- und Rechtsanwälte PartG mbB

(57) **Abstract**

Techniques to facilitate extraction of display objects for human-machine interface (HMI) displays are disclosed herein. In at least one implementation, a selection of a user-defined area is received that identifies at least a portion of a piping and instrumentation diagram (P&1D) associated with an industrial automation environment. The user-defined area of the P&ID is analyzed to identify at least one object within the user-defined area of the P&ID. The at least one object identified within the user-defined area of the P&ID is extracted to generate a static graphic object. Edit instructions are received that describe at least one modification to a visual appearance of the static graphic object. The edit instructions arc applied to the static graphic object to generate an HMI graphic object comprising the at least one modification to the visual appearance of the static graphic object.

## Description

### TECHNICAL FIELD

Aspects of the disclosure are related to computing hardware and software technology.

### TECHNICAL BACKGROUND

Various manufacturing processes and other industrial operations occur in industrial automation environments. Some examples of industrial automation environments include industrial mining operations, automobile manufacturing factories, food processing plants, oil drilling operations, microprocessor fabrication facilities, and other types of industrial enterprises. Industrial automation environments typically involve many complex systems and processes which are often spread out over various disparate locations.

Industrial automation environments utilize various machines during the industrial manufacturing process, such as drives, pumps, motors, compressors, valves, robots, and other mechanical devices. These devices have various moving parts and other components that are driven by instructions received from industrial controller systems. Machine builders, solution providers, and other content creators typically produce the control logic needed to run on these industrial controller systems in order to control the mechanical functions of the devices and carry out their intended functions.

Industrial environments also commonly include a human-machine interface (HMI). An HMI typically receives and processes the status data from the machines to generate various graphical displays, which may indicate the current and historical performance of the machines. In traditional implementations, the HMI may also provide a mechanism for an operator to send control instructions to a control system that controls the machines. For example, an operator might use the HMI to direct the control system to update drive parameters, turn on a pump, speed-up a motor, or stop a robot.

### OVERVIEW

Techniques to facilitate extraction of display objects for human-machine interface (HMI) displays are disclosed herein. In at least one implementation, a selection of a user-defined area is received that identifies at least a portion of a piping and instrumentation diagram (P&ID) associated with an industrial automation environment. The user-defined area of the P&ID is analyzed to identify at least one object within the user-defined area of the P&ID. The at least one object identified within the user-defined area of the P&ID is extracted to generate a static graphic object. Edit instructions are received that describe at least one modification to a visual appearance of the static graphic object. The edit instructions are applied to the static graphic object to generate an HMI graphic object comprising the at least one modification to the visual appearance of the static graphic object.

This Overview is provided to introduce a selection of concepts in a simplified form that are further described below in the Detailed Description. It should be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 is a block diagram that illustrates a piping and instrumentation diagram (P&ID) associated with an industrial automation environment in an exemplary implementation.
Figure 2 is a block diagram that illustrates a selection of a user-defined area on a P&ID associated with an industrial automation environment in an exemplary implementation.
Figure 3 is a block diagram that illustrates an exemplary graphical display of an HMI graphic extractor application executing on a computing system in an exemplary implementation.
Figure 4 is a block diagram that illustrates a selection of a user-defined area on a P&ID associated with an industrial automation environment in an exemplary implementation.
Figure 5 is a block diagram that illustrates an exemplary graphical display of an HMI graphic extractor application executing on a computing system in an exemplary implementation.
Figure 6 is a block diagram that illustrates an exemplary graphical display of an HMI executing on a computing system in an exemplary implementation.
Figure 7 is a flow diagram that illustrates an operation of a computing system in an exemplary implementation.
Figure 8 is a block diagram that illustrates an operational scenario involving a computing system in an industrial automation environment in an exemplary implementation.
Figure 9 is a block diagram that illustrates a computing system in an exemplary implementation.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

A piping and instrumentation diagram (P&ID) provides a detailed graphical overview of an industrial automation environment, such as a manufacturing factory, processing plant, fabrication facility, and other types of industrial enterprises. Generally, a P&ID comprises a schematic drawing that illustrates the process flow and industrial equipment along with the instrumentation and control devices. A P&ID typically includes mechanical equipment such as pressure vessels, tanks, pumps, motors, compressors, drives, valves and other industrial assets, process pipelines and flow directions, process control and status monitoring instrumentation, and other objects employed in an industrial automation process.

Engineers often work to develop customized HMI displays to monitor and control specific industrial operations. Generally, when creating HMI displays, an engineer will refer to the P&ID to get an overview of the plant and see how the various industrial equipment and other objects are laid out and interconnected to one another. The engineer would then typically create the HMI displays according to the P&ID by manually placing and arranging objects linked to various devices and instruments within the HMI displays, which can be a very time consuming and tedious process.

The techniques described herein facilitate the creation of HMI displays by enabling an engineer to extract graphical objects from a P&ID that may be imported into an HMI application for inclusion on an HMI display. In at least one implementation, a software tool is provided for generating HMI graphics by extracting static graphical objects from a P&ID. The tool allows an engineer to define a specific area within a P&ID to specify a graphical object the engineer would like to import into an HMI display, which then extracts the object and enables editing of visual properties of the object before saving the object in an HMI-compatible file format. In some implementations, the application may use computer vision technology to automatically identify objects within the user-defined area of the P&ID, which can then be extracted, edited, and saved as HMI graphic objects. Once the HMI graphic objects are generated, an engineer can import the HMI graphics into an HMI application for inclusion on an HMI display, thereby avoiding having to manually draw the object in the HMI application.

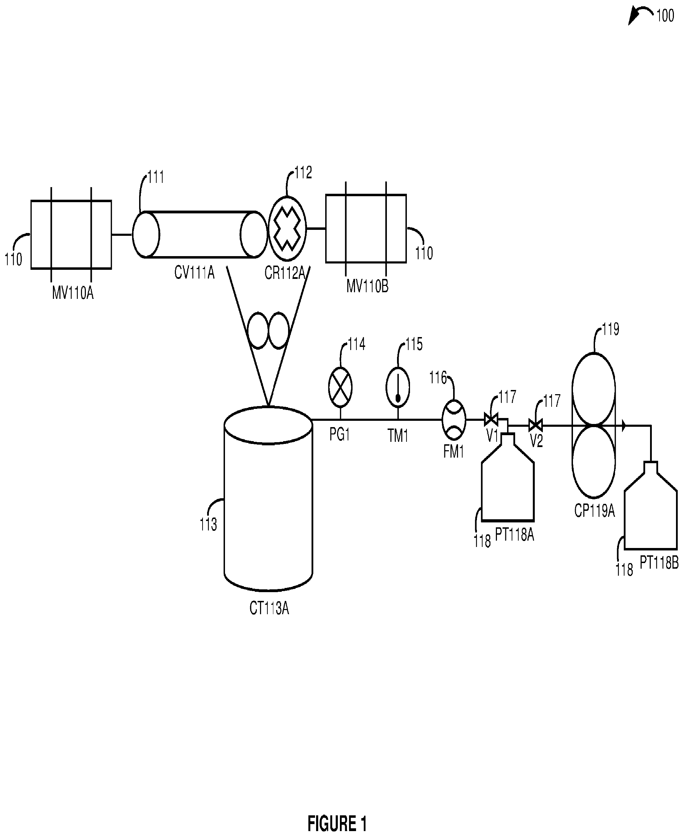

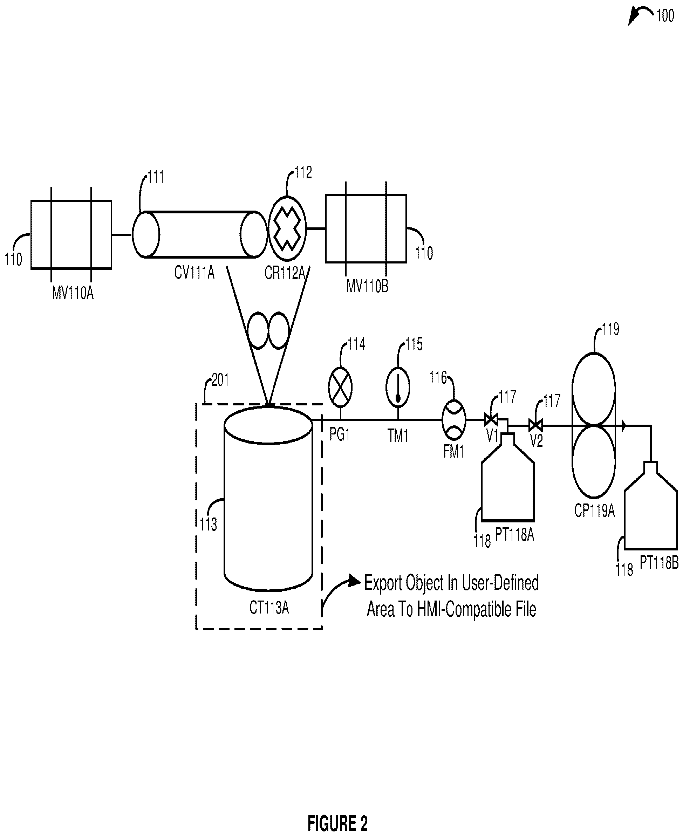

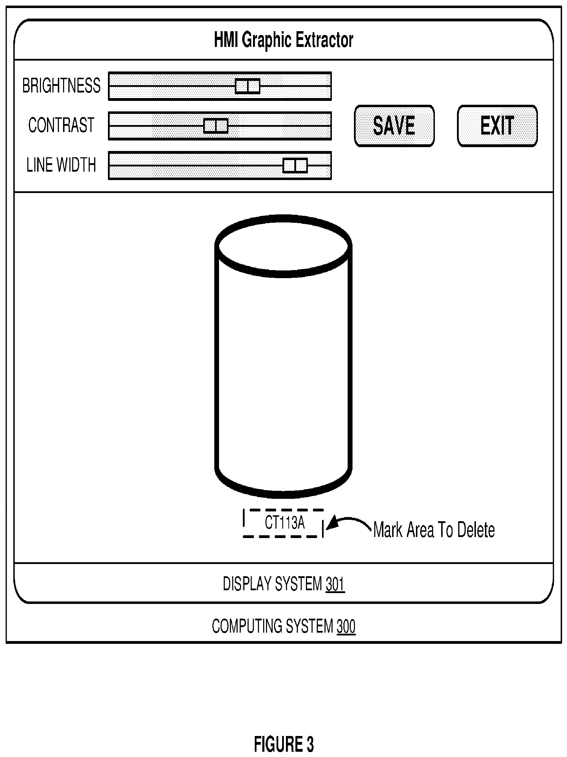

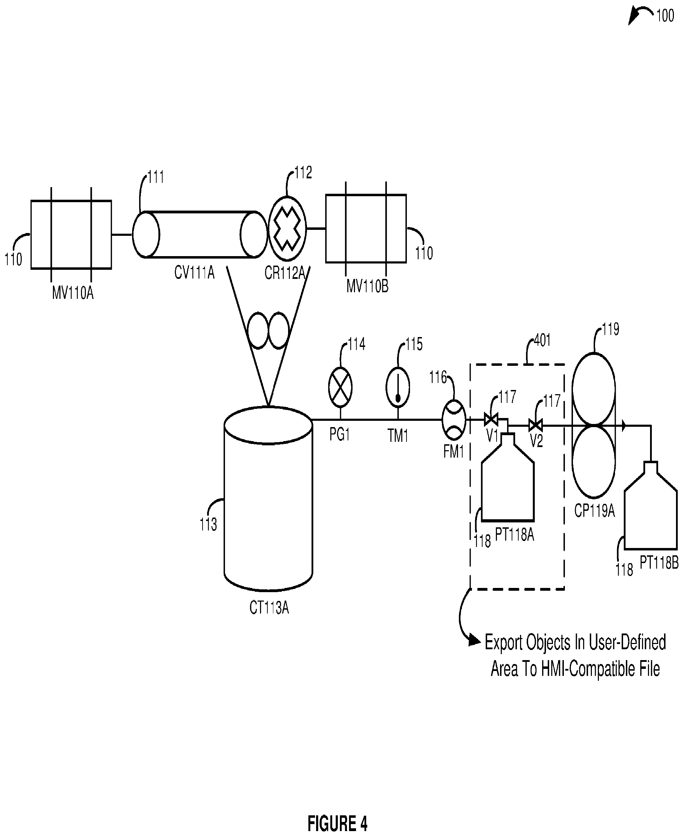

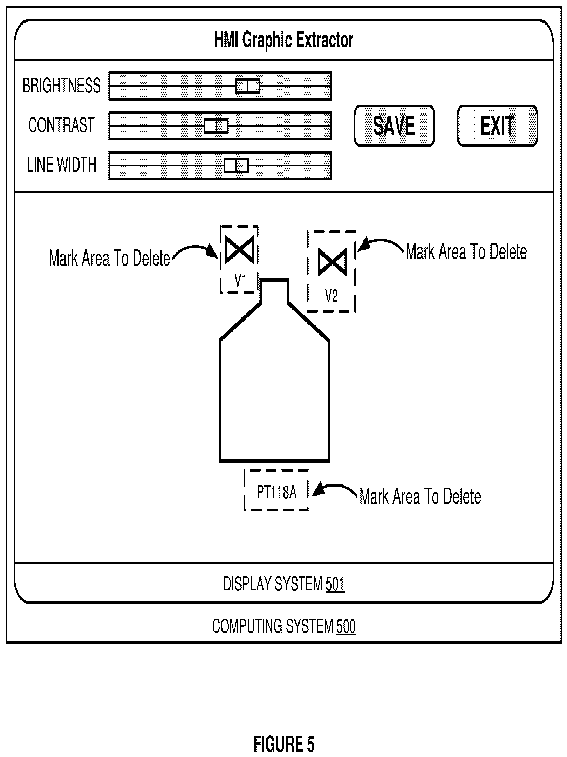

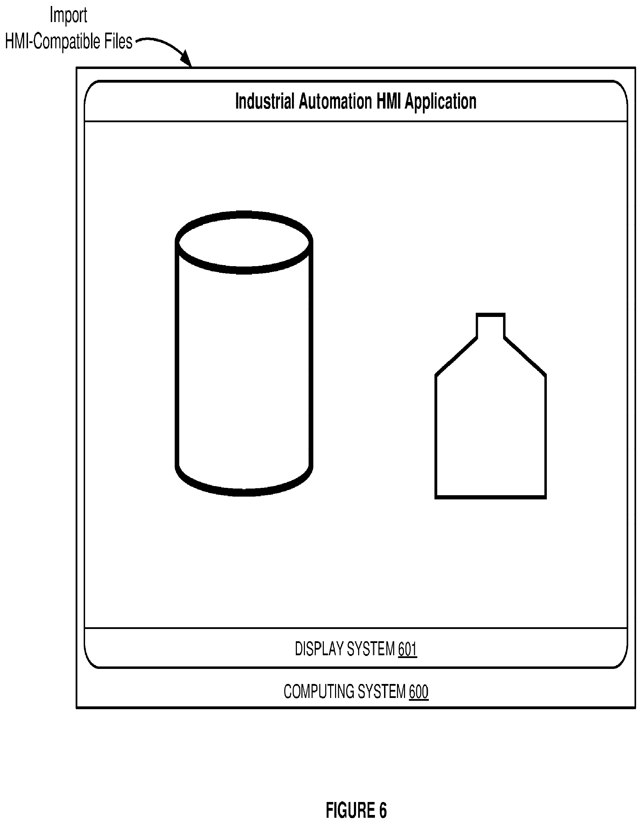

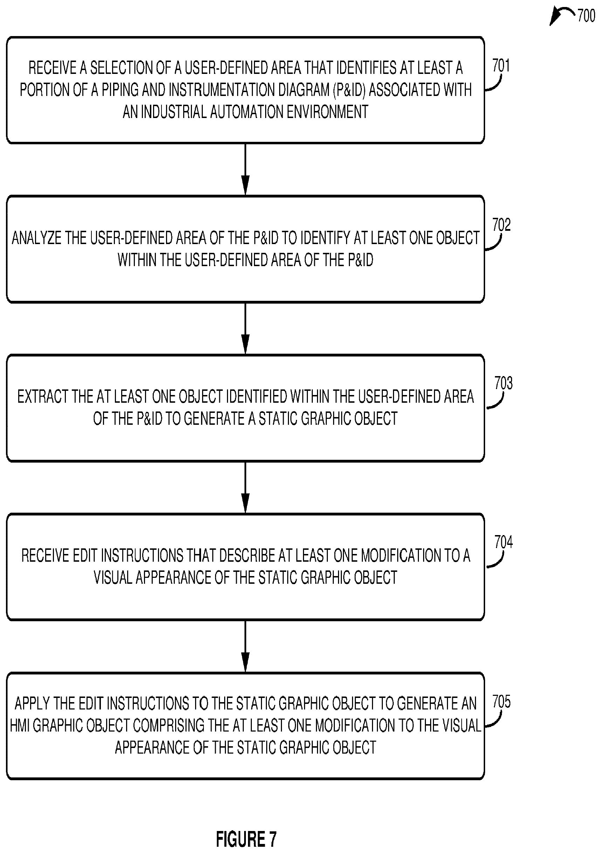

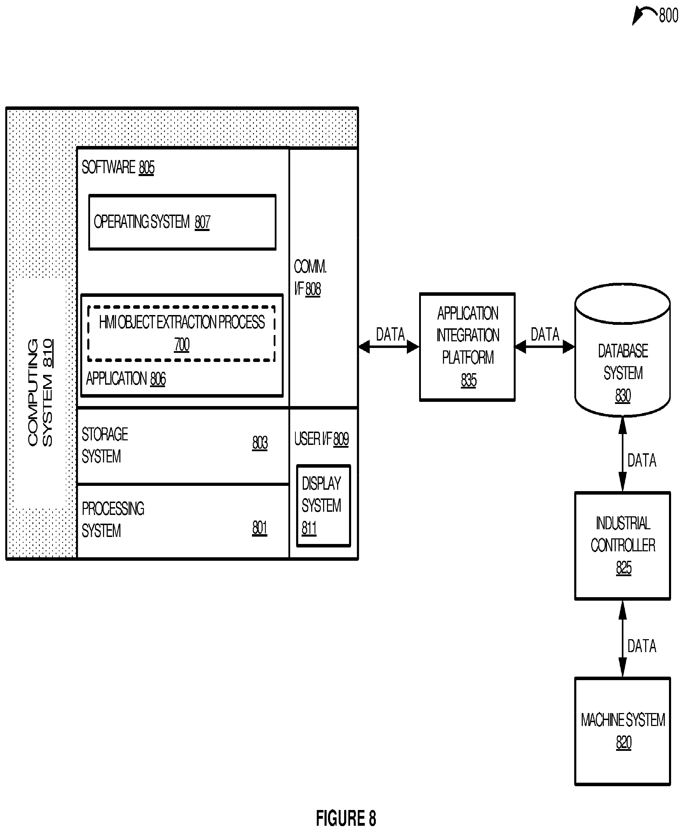

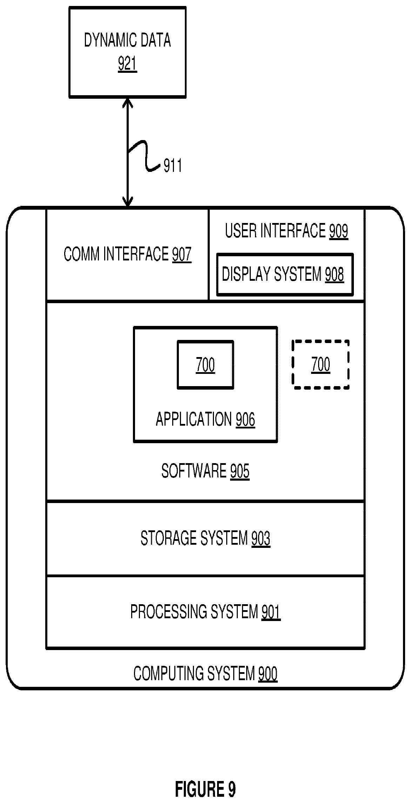

Referring now to the drawings, Figure 1 illustrates an exemplary P&ID associated with an industrial automation environment, while Figure 2 illustrates a user-defined area selected on the P&ID. Figure 3 is a block diagram that illustrates a graphical display of an HMI graphic extractor application executing on a computing system in an exemplary implementation. Figure 4 illustrates another user-defined area selected on the P&ID, Figure 5 illustrates an exemplary graphical display of an HMI graphic extractor application executing on a computing system, and Figure 6 illustrates a graphical display of an HMI application importing graphical objects extracted from a P&ID in an exemplary implementation. Figure 7 is a flow diagram that illustrates an operation of a computing system to facilitate extraction of display objects for HMI displays in an exemplary embodiment. Figure 8 illustrates an exemplary industrial automation environment that includes a computing system that may be used to execute an HMI object extraction process, and Figure 9 illustrates an exemplary computing system that may be used to perform any of the HMI object extraction processes and operational scenarios described herein.

Turning now to Figure 1, a piping and instrumentation diagram (P&ID) of industrial automation environment 100 is illustrated in an exemplary embodiment. Industrial automation environment 100 provides an example of an industrial automation environment that may utilize any of the techniques disclosed herein, but note that the present disclosure could equally apply to any other industrial application. In this example, industrial automation environment 100 comprises a mineral processing facility. Industrial automation environment 100 includes motors 110, conveyor 111, crusher 112, collection tank 113, pressure gauge 114, thermometer 115, flow meter 116, valves 117, pressure tanks 118, and compressor 119.

The techniques described below with respect to Figures 1-6 could be executed by a computing system, such as computing system 900, and could be combined with operation 700 of Figure 7 in some implementations. In this example, each of the industrial objects appearing in the P&ID of industrial automation environment 100 is labeled with a tag name. These tags provide a reference to help uniquely identify each of the objects. In this example, the motors 110 are shown as having corresponding tags MV110A and MV110B, respectively, conveyor 111 has tag CV111A, crusher 112 has tag CR112A, collection tank 113 has tag CT113A, pressure gauge 114 has tag PG1, thermometer 115 has tag TM1, and flow meter 116 has tag FM1. In addition, the valves 117 have respective tags V1 and V2, the pressure tanks 118 have respective tags PT118A and PT118B, and compressor 119 has tag CP119A.

In some implementations, the P&ID file could comprise an image file, a portable document format (PDF) file, or any other type of graphical file format. By loading the P&ID into the HMI graphic extractor tool described herein, a user can define an area on the P&ID that includes at least one graphical display object, which may then be analyzed to automatically identify and extract the graphical object into an HMI-compatible file format which can then be imported into an HMI application for use in creating an HMI display. An exemplary P&ID in which a user has defined a specific area to designate an object for extraction will now be discussed with respect to Figure 2.

In Figure 2, the P&ID of industrial automation environment 100 is once again illustrated. However, in this example, a user has opened the P&ID file with an HMI graphic extractor tool and defined an area 201 on the P&ID to indicate an object that the user wants to extract for inclusion in an HMI display. Specifically, to define the area 201, the user has drawn a box around the collection tank 113, as shown by the dashed line in Figure 2. The user-defined area 201 surrounds the graphical object representing the collection tank 113 in order to designate the object that the user desires to extract from the P&ID. For example, the user may be motivated to extract the collection tank 113 graphic because the HMI display creation software does not have a suitable graphic for a collection tank and the user would otherwise have to draw one manually. In at least one implementation, in order to identify one or more objects within the user-defined area 201, the graphic extractor tool could employ computer vision technology to identify the objects as closed contour shapes appearing within the user-defined area 201. For example, in some implementations, the closed-contour object appearing near the center of the user-defined area 201 could be identified for extraction by computer vision technology, which would be the collection tank 113 graphic in this example. In at least one implementation, the tool extracts the object or objects appearing within the user-defined area 201 to an HMT-compatible file, such as a portable network graphics (PNG) format image file that may be imported by an HMI application. The HMI application software used to design and create HMI displays could then import this file and the user would be able to include the collection tank 113 graphic extracted from the P&ID in an HMI display. In at least one implementation, the HMI graphic extractor tool may also enable the user to make small edits to the visual appearance of the extracted graphic prior to generating the HMI graphic object. An exemplary HMI graphic extractor application display screen that may be used to perform such visual editing on the graphic extracted from the P&ID will now be discussed with respect to Figure 3.

Figure 3 is a block diagram that illustrates an exemplary graphical display of an HMI graphic extractor application executing on a computing system 300 in an exemplary implementation. In this example, computing system 300 includes display system 301 which displays an HMI graphic extractor display screen. The HMI graphic extractor display shown on display system 301 provides options for the user to adjust various visual properties associated with the graphical objects extracted from the P&ID. In this example, the graphic extractor tool provides the user with the options to modify the brightness, contrast, and line width of the graphical object, but note that any other visual properties could also be adjusted in other implementations, including line color, background color, object fill color, font type, font style, and any other aspects associated with the visual appearance of the extracted objects. The user is also able to mark out and delete portions of graphical objects that were extracted from the P&ID but not desired by the user, such as the text of the tag name associated with the collection tank as shown in this example. Once the user has eliminated the undesired graphical elements that were unintentionally extracted from within the user-defined area of the P&ID and adjusted the visual settings associated with the target object, the user can save the edited object to generate an HMI-compatible graphic object. The resulting HMI graphic object can then be imported into an HMI design application for use in creating custom HMI displays. Another exemplary P&ID in which the user has defined an additional area for graphic object extraction will now be discussed with respect to Figure 4.

Figure 4 again illustrates the P&ID of industrial automation environment 100, but in this example, the user has opened the P&ID file with the HMI graphic extractor tool and defined an area 401 on the P&ID to indicate another object that the user wants to extract for inclusion in an HMI display. In particular, to define the area 401, the user has drawn a box around one of the pressure tanks 118 in order to designate the object that the user desires to extract from the P&ID, as shown by the dashed line in Figure 4. For example, the user may desire to extract the pressure tank 118 graphic because the HMI display creation software does not include a graphical object for a pressure tank and the user would otherwise have to draw one manually. In some implementations, in order to identify the objects within the user-defined area 401, the graphic extractor tool could employ computer vision technology to identify the objects as any closed contours centered within the user-defined area 401. In at least one implementation, the tool extracts the objects appearing within the user-defined area 401 to an HMI-compatible file that may be imported by an HMI application for use in creating HMI displays. In selecting the user-defined area 401, the user has also inadvertently included the valves 117 due to their close proximity to the selected pressure tank 118. The user would like to remove the valves 117 from the extracted objects in order to isolate just the pressure tank 118 graphical object. An exemplary HMI graphic extractor application display screen that may be used to remove visual elements from the extracted objects and perform other visual editing on the graphics extracted from the P&ID will now be discussed with respect to Figure 5.

Figure 5 is a block diagram that illustrates an exemplary graphical display of an HMI graphic extractor application executing on a computing system 500 in an exemplary implementation. In this example, computing system 500 includes display system 501 which displays an HMI graphic extractor display screen. The HMI graphic extractor display shown on display system 501 provides display settings for the user to adjust various visual properties associated with the graphical objects extracted from the P&ID. In this example, the graphic extractor tool provides the user with the options to modify the brightness, contrast, and line width of the graphical object, but note that other graphical settings could also be adjusted in other implementations, including color, font, and any other visual properties associated with the extracted objects. The user is also able to mark out and delete portions of graphical objects that were extracted from the P&ID but were not desired by the user. As shown in this example, the user has marked the valves V1 and V2 and the text of the tag names associated with the valves and the pressure tank for deletion. Once the user has eliminated the undesired graphical elements that were inadvertently extracted from within the user-defined area of the P&ID and adjusted the visual settings associated with the target object, the user can save the edited object to generate an HMI-compatible graphical object. The resulting HMI graphic object may then be imported into an HMI design application for use in creating custom HMI displays. An exemplary HMI application display screen that may be generated by importing the HMT-compatible files produced by the HMI graphics extractor examples discussed above will now be discussed with respect to Figure 6.

Figure 6 is a block diagram that illustrates an exemplary graphical display of an HMI application executing on a computing system 600 in an exemplary implementation. In some examples, the HMI application could comprise a FactoryTalk® View Studio application provided by Rockwell Automation, Inc. In this example, computing system 600 includes display system 601 which displays an HMI display screen. The HMI display shown on display system 601 may be created by importing the HMI-compatible files generated in the previous examples shown in Figures 2-5. For example, the user may direct the HMI application to import the graphical objects for the collection tank and the pressure tank that were extracted from the P&ID as discussed above. Once imported, the user can then arrange these graphical objects in any desired position along with other HMI objects in order to create an HMI display. An exemplary operation to facilitate extraction of display objects for HMI displays will now be described in greater detail with respect to Figure 7.

Figure 7 is a flow diagram that illustrates an operation 700 of a computing system in an exemplary implementation. The operation 700 shown in Figure 7 may also be referred to as HMI object extraction process 700 herein. The steps of the operation are indicated below parenthetically.

Operation 700 may be employed to operate a computing system to facilitate extraction of display objects for HMI displays. As shown in the operational flow of process 700, a selection of a user-defined area is received that identifies at least a portion of a piping and instrumentation diagram (P&ID) associated with an industrial automation environment (701). The P&ID provides a graphical representation of various industrial objects and their involvement in a process flow within the industrial automation environment, such as machines and other mechanical equipment and devices, process pipelines and flow directions, process control and status monitoring instrumentation, and any other objects employed in an industrial automation process. The P&ID may also include tag references that uniquely label each of the industrial objects appearing in the P&ID. However, some objects appearing in the P&ID may not have associated tags, such as static objects in the background that do not have controllable features or produce status metrics. For example, some static objects that may appear in a P&ID that may not include tag names could comprise wires, pipes, and other elements that connect various graphical objects, containers, graphical representations of resource reserves, specialized non-standard equipment, and any other graphical elements appearing in the P&ID. Since these elements may not already have a graphical representation available for use in creating an HMI display, the user would otherwise have to manually draw these elements to include them in the display, which can be a very time consuming process. However, by providing the selection of the user-defined area on the P&ID to indicate the graphical objects that the user desires to extract from the P&ID, the user is able to automatically generate these objects in a graphical format capable of being imported into an HMI application. In some implementations, the user could provide the selection of the user-defined area on the P&ID by drawing a box or some other boarder around at least a portion of the P&ID. The selection of the user-defined area provides an indication of at least one graphical object that the user desires to extract from the P&ID. In some implementations, the user may select an entire P&ID page as the user-defined area that should be used for extracting the graphical objects, such as when the user desires to include multiple objects in the extracted image or when the target object for extraction is very large and appears on the entire P&ID display. The selection of the user-defined area could comprise any shape and could include one or more objects appearing in the P&ID.

The user-defined area of the P&ID is analyzed to identify at least one object within the user-defined area of the P&ID (702). In some implementations, the user-defined area of the P&ID may be analyzed using computer vision technology to identify the at least one object within the user-defined area of the P&ID. For example, computer vision technology could be employed to analyze the user-defined area of the P&ID to identify closed objects that may be distinguished from the open space surrounding them. In at least one implementation, the user-defined area of the P&ID may be analyzed using computer vision technology to identify at least one closed contour as the at least one object within the user-defined area of the P&ID. In some implementations, the analysis of the user-defined area of the P&ID could utilize algorithms that select and eliminate the outer extremities of the selected area to eliminate the open space area towards the edges of the selection, thereby exposing only the closed contour objects centered within that area. In some examples, when analyzing the user-defined area of the P&ID to identify any objects therein, various graphical processing selection algorithms could be employed that select pixels in a graphical image based on tone and color, or based on identifying shapes or by detecting object edges. Other techniques to analyze the user-defined area of the P&ID to identify at least one object within the user-defined area of the P&ID are possible and within the scope of this disclosure.

The at least one object identified within the user-defined area of the P&ID is extracted to generate a static graphic object (703). In some implementations, the static graphic object could comprise multiple graphic objects and other elements appearing within the user-defined area of the P&ID. For example, the static graphic object could be generated by extracting any closed contour objects identified within the user-defined area of the P&ID. The extracted static graphic object could also include text, connectors, indicators, and any other elements appearing within the user-defined area of the P&ID that were identified by analyzing the user-defined area of the P&ID as discussed above. In at least one implementation, the extracted object or objects identified within the user-defined area of the P&ID are then displayed to the user to enable the user to further refine the selection of which object or objects the user desires to extract, along with edits to visual properties associated with the objects.

Edit instructions are received that describe at least one modification to a visual appearance of the static graphic object (704). In some implementations, in order to receive the edit instructions, the at least one object identified within the user-defined area of the P&ID that is extracted as the static graphic object is displayed to the user to enable the user to eliminate any unintentional screen elements that were inadvertently extracted along with the target object and to edit the visual properties associated with the object. In at least one implementation, receiving the edit instructions that describe the at least one modification to the visual appearance of the static graphic object could comprise receiving a selection of one or more graphic elements to remove from the static graphic object. For example, the user could mark, highlight or otherwise identify any extraneous graphic elements that were extracted along with the target object in order to isolate the target object as the sole graphical object desired. In addition, in some implementations the edit instructions that describe the at least one modification to the visual appearance of the static graphic object could comprise a line width modification associated with the static graphic object. In some examples, other edit instructions that describe the at least one modification to the visual appearance of the static graphic object could include modifications to brightness, contrast, color, font, style, format, or other modifications to any visual properties that may be applied to the object or objects extracted as the static graphic object.

The edit instructions arc applied to the static graphic object to generate an HMI graphic object comprising the at least one modification to the visual appearance of the static graphic object (705). In some implementations, the edit instructions are applied to generate an output image of the HMI graphic object that incorporates all of the modifications to the visual appearance of the static graphic object selected by the user in the edit instructions. Once generated, the HMI graphic object may be imported into an HMI application for inclusion on an HMI display. In at least one implementation, applying the edit instructions to the static graphic object to generate the HMI graphic object could comprise applying the edit instructions to the static graphic object to generate the HMI graphic object in an image file format compatible with an HMI application. For example, the HMI graphic object could be generated in an HMI-compatible image file type, such as a portable network graphics (PNG) format image file, a joint photographic experts group (JPEG) image type, or any other image file format compatible with an HMI application. The HMI application software used to design and create HMI displays could then import the HMI graphic object and the user would be able to include the graphic object or objects extracted from the P&ID to create an HMI display.

In at least one implementation, after the user edits are applied and the object is extracted into an HMI graphic object, the tool could analyze all P&ID files associated with the plant, factory, or manufacturing process to search for shapes of similar form to the extracted HMI graphic object. For example, by analyzing moments of inertia based on area to find whether shapes are similar, the application could identify all of the other places in the project where the same HMI graphic object is used, and automatically include them in various HMI displays that correspond to those areas. In this manner, similar graphic objects that appear throughout the P&ID files of a particular process or plant could be standardized when generating HMI displays for the project. Accordingly, if other users create an HMI display within that project or for that plant that include the same object as the extracted HMI graphic object, all of the uses of that HMI graphic object would be standardized throughout the project. Moreover, if any changes arc subsequently made to the HMI graphic object, those changes would propagate throughout the project and be applied to every other instance of that same HMI graphic object.

Advantageously, a user can define an area on a P&ID file from which objects may be extracted from the P&ID for use in creating HMI displays. Any industrial objects within the user-defined area can be identified, extracted, and edited to generate HMI-compatible graphic objects. By enabling an engineer to extract graphical objects from a P&ID and generate HMI graphic objects that may be used with an HMI application, the techniques described herein greatly facilitate the creation of HMI displays. In this manner, engineers and other users can more rapidly develop and deploy HMI displays for monitoring and controlling industrial operations, without having to manually draw graphical objects within the HMI display, saving valuable work time.

Turning now to Figure 8, a block diagram that illustrates an industrial automation environment 800 in an exemplary implementation is shown. Industrial automation environment 800 provides an example of an industrial automation environment that may be utilized to implement the predictive maintenance processes disclosed herein, but other environments could also be used. Industrial automation environment 800 includes computing system 810, machine system 820, industrial controller 825, database system 830, and application integration platform 835. Computing system 810 provides an example of a computing system that may be used to execute HMI object extraction process 700 or variations thereof, although other possible computing systems could use alternative configurations. Machine system 820 and controller 825 are in communication over a communication link, controller 825 and database system 830 communicate over a communication link, database system 830 and application integration platform 835 communicate over a communication link, and application integration platform 835 and computing system 810 are in communication over a communication link. Note that there would typically be many more machine systems in most industrial automation environments, but the number of machine systems shown in Figure 8 has been restricted for clarity.

Industrial automation environment 800 comprises an industrial mining operation, automobile manufacturing factory, food processing plant, oil drilling operation, microprocessor fabrication facility, or some other type of industrial enterprise. Machine system 820 could comprise a sensor, drive, pump, filter, drill, motor, robot, fabrication machinery, mill, printer, or any other industrial automation equipment, including their associated control systems. A control system comprises, for example, industrial controller 825, which could include automation controllers, programmable logic controllers (PLCs), programmable automation controllers (PACs), or any other controllers used in automation control. Additionally, machine system 820 could comprise other industrial equipment, such as a brew kettle in a brewery, a reserve of coal or other resources, or any other element that may reside in an industrial automation environment 800.

Machine system 820 continually produces operational data over time. The operational data indicates the current status of machine system 820, such as parameters, pressure, temperature, speed, energy usage, operational equipment effectiveness (OEE), mean time between failure (MTBF), mean time to repair (MTTR), voltage, throughput volumes, times, tank levels, or any other performance status metrics. The operational data may comprise dynamic charts or trends, real-time video, or some other graphical content. Machine system 820 and/or controller 825 is capable of transferring the operational data over a communication link to database system 830, application integration platform 835, and computing system 810, typically via a communication network. Database system 830 could comprise a disk, tape, integrated circuit, server, or some other memory device. Database system 830 may reside in a single device or may he distributed among multiple memory devices.

Application integration platform 835 comprises a processing system and a communication transceiver. Application integration platform 835 may also include other components such as a router, server, data storage system, and power supply. Application integration platform 835 may reside in a single device or may be distributed across multiple devices. Application integration platform 835 may be a discrete system or may be integrated within other systems, including other systems within industrial automation environment 800. In some examples, application integration platform 835 could comprise a FactoryTalk® VantagePoint server system provided by Rockwell Automation, Inc.

The communication links over which data is exchanged between machine system 820, industrial controller 825, database system 830, application integration platform 835, and communication interface 808 of computing system 810 could use metal, air, space, optical fiber such as glass or plastic, or some other material as the transport medium, including combinations thereof. The communication links could comprise multiple network elements such as routers, gateways, telecommunication switches, servers, processing systems, or other communication equipment and systems for providing communication and data services. These communication links could use various communication protocols, such as TDM, IP, Ethernet, telephony, optical networking, packet networks, cellular networks, wireless mesh networks (WMN), local area networks (LAN), metropolitan area networks (MAN), wide area networks (WAN), hybrid fiber coax (HFC), communication signaling, wireless protocols, communication signaling, peer-to-peer networking over Bluetooth, Bluetooth low energy, Wi-Fi Direct, near field communication (NFC), or some other communication format, including combinations thereof. The communication links could be direct links or may include intermediate networks, systems, or devices.

Computing system 810 may be representative of any computing apparatus, system, or systems on which the HMI object extraction process 700 disclosed herein or variations thereof may be suitably implemented. In some examples, computing system 810 could execute an HMI application for developing HMI displays, such as a FactoryTalk® View Studio application provided by Rockwell Automation, Inc. Computing system 810 provides an example of a computing system that could be used as a either a server or a client device in some implementations, although such devices could have alternative configurations. Examples of computing system 810 include mobile computing devices, such as cell phones, tablet computers, laptop computers, notebook computers, and gaming devices, as well as any other type of mobile computing devices and any combination or variation thereof. Examples of computing system 810 also include desktop computers, server computers, and virtual machines, as well as any other type of computing system, variation, or combination thereof. In some implementations, computing system 810 could comprise a mobile device capable of operating in a server-like fashion which, among other uses, could be utilized in a wireless mesh network.

Computing system 810 includes processing system 801, storage system 803, software 805, communication interface 808, and user interface 809. Processing system 801 is operatively coupled with storage system 803, communication interface 808, and user interface 809. Processing system 801 loads and executes software 805 from storage system 803. Software 805 includes application 806 and operating system 807. Application 806 may include HMI object extraction process 700 in some examples. When executed by computing system 810 in general, and processing system 801 in particular, software 805 directs computing system 810 to operate as described herein for HMI object extraction process 700 or variations thereof. In this example, user interface 809 includes display system 811, which itself may be part of a touch screen that also accepts user inputs via touches on its surface. Computing system 810 may optionally include additional devices, features, or functionality not discussed here for purposes of brevity.

Turning now to Figure 9, a block diagram is shown that illustrates computing system 900 in an exemplary implementation. Computing system 900 provides an example of any computing system that may be used to execute HMI object extraction process 700 or variations thereof, although other possible computing systems could use alternative configurations. Computing system 900 includes processing system 901, storage system 903, software 905, communication interface 907, and user interface 909. User interface 909 comprises display system 908. Software 905 includes application 906 which itself includes HMI object extraction process 700. HMI object extraction process 700 may optionally be implemented separately from application 906, as indicated by the dashed line in Figure 9.

Computing system 900 may be representative of any computing apparatus, system, or systems on which application 906 and HMI object extraction process 700 or variations thereof may be suitably implemented. Examples of computing system 900 include mobile computing devices, such as cell phones, tablet computers, laptop computers, notebook computers, and gaming devices, as well as any other type of mobile computing devices and any combination or variation thereof. Note that the features and functionality of computing system 900 may apply as well to desktop computers, server computers, and virtual machines, as well as any other type of computing system, variation, or combination thereof.

Computing system 900 includes processing system 901, storage system 903, software 905, communication interface 907, and user interface 909. Processing system 901 is operatively coupled with storage system 903, communication interface 907, and user interface 909. Processing system 901 loads and executes software 905 from storage system 903. When executed by computing system 900 in general, and processing system 901 in particular, software 905 directs computing system 900 to operate as described herein for HMI object extraction process 700 or variations thereof. Computing system 900 may optionally include additional devices, features, or functionality not discussed herein for purposes of brevity.

Referring still to Figure 9, processing system 901 may comprise a microprocessor and other circuitry that retrieves and executes software 905 from storage system 903. Processing system 901 may be implemented within a single processing device but may also be distributed across multiple processing devices or sub-systems that cooperate in executing program instructions. Examples of processing system 901 include general purpose central processing units, application specific processors, and logic devices, as well as any other type of processing device, combinations, or variations thereof.

Storage system 903 may comprise any computer-readable storage media capable of storing software 905 and readable by processing system 901. Storage system 903 may include volatile and nonvolatile, removable and non-removable media implemented in any method or technology for storage of information, such as computer readable instructions, data structures, program modules, or other data. Storage system 903 may be implemented as a single storage device but may also be implemented across multiple storage devices or sub-systems co-located or distributed relative to each other. Storage system 903 may comprise additional elements, such as a controller, capable of communicating with processing system 901. Examples of storage media include random-access memory, read-only memory, magnetic disks, optical disks, flash memory, virtual memory and non-virtual memory, magnetic cassettes, magnetic tape, magnetic disk storage or other magnetic storage devices, or any other medium which can be used to store the desired information and that may be accessed by an instruction execution system, as well as any combination or variation thereof, or any other type of storage media. In no case is the computer-readable storage media a propagated signal.

In operation, in conjunction with user interface 909, processing system 901 may load and execute portions of software 905, such as HMI object extraction process 700, to render a graphical user interface for application 906 for display by display system 908 of user interface 909. Software 905 may be implemented in program instructions and among other functions may, when executed by computing system 900 in general or processing system 901 in particular, direct computing system 900 or processing system 901 to receive a selection of a user-defined area that identifies at least a portion of a piping and instrumentation diagram (P&ID) associated with an industrial automation environment. Software 905 may further direct computing system 900 or processing system 901 to analyze the user-defined area of the P&ID to identify at least one object within the user-defined area of the P&ID. In addition, software 905 directs computing system 900 or processing system 901 to extract the at least one object identified within the user-defined area of the P&ID to generate a static graphic object. Software 905 may further direct computing system 900 or processing system 901 to receive edit instructions that describe at least one modification to a visual appearance of the static graphic object. Software 905 may direct computing system 900 or processing system 901 to apply the edit instructions to the static graphic object to generate an HMI graphic object comprising the at least one modification to the visual appearance of the static graphic object.

Software 905 may include additional processes, programs, or components, such as operating system software or other application software. Examples of operating systems include Windows®, iOS®, and Android®, as well as any other suitable operating system. Software 905 may also comprise firmware or some other form of machine-readable processing instructions executable by processing system 901.

In general, software 905 may, when loaded into processing system 901 and executed, transform computing system 900 overall from a general-purpose computing system into a special-purpose computing system customized to facilitate extraction of display objects for HMI displays as described herein for each implementation. For example, encoding software 905 on storage system 903 may transform the physical structure of storage system 903. The specific transformation of the physical structure may depend on various factors in different implementations of this description. Examples of such factors may include, but are not limited to the technology used to implement the storage media of storage system 903 and whether the computer-storage media are characterized as primary or secondary storage.

In some examples, if the computer-readable storage media are implemented as semiconductor-based memory, software 905 may transform the physical state of the semiconductor memory when the program is encoded therein. For example, software 905 may transform the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate this discussion.

It should be understood that computing system 900 is generally intended to represent a computing system with which software 905 is deployed and executed in order to implement application 906 and/or HMI object extraction process 700 (and variations thereof). However, computing system 900 may also represent any computing system on which software 905 may be staged and from where software 905 may be distributed, transported, downloaded, or otherwise provided to yet another computing system for deployment and execution, or yet additional distribution. For example, computing system 900 could be configured to deploy software 905 over the internet to one or more client computing systems for execution thereon, such as in a cloud-based deployment scenario.

Communication interface 907 may include communication connections and devices that allow for communication between computing system 900 and other computing systems (not shown) or services, over a communication network 911 or collection of networks. In some implementations, communication interface 907 receives dynamic data 921 over communication network 911. Examples of connections and devices that together allow for inter-system communication may include network interface cards, antennas, power amplifiers, RF circuitry, transceivers, and other communication circuitry. The aforementioned network, connections, and devices are well known and need not be discussed at length here.

User interface 909 may include a voice input device, a touch input device for receiving a gesture from a user, a motion input device for detecting non-touch gestures and other motions by a user, and other comparable input devices and associated processing elements capable of receiving user input from a user. Output devices such as display system 908, speakers, haptic devices, and other types of output devices may also be included in user interface 909. The aforementioned user input devices are well known in the art and need not be discussed at length here. User interface 909 may also include associated user interface software executable by processing system 901 in support of the various user input and output devices discussed above. Separately or in conjunction with each other and other hardware and software elements, the user interface software and devices may provide a graphical user interface, a natural user interface, or any other kind of user interface. User interface 909 may be omitted in some examples.

The functional block diagrams, operational sequences, and flow diagrams provided in the Figures are representative of exemplary architectures, environments, and methodologies for performing novel aspects of the disclosure. While, for purposes of simplicity of explanation, methods included herein may be in the form of a functional diagram, operational sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The above description and associated drawings teach the best mode of the invention. The following claims specify the scope of the invention. Some aspects of the best mode may not fall within the scope of the invention as specified by the claims. Also, while the preceding discussion describes embodiments employed specifically in conjunction with the monitoring and analysis of industrial processes, other applications, such as the mathematical modeling or monitoring of any man-made or naturally-existing system, may benefit from use of the concepts discussed above. Further, those skilled in the art will appreciate that the features described above can be combined in various ways to form multiple variations of the invention. As a result, the invention is not limited to the specific embodiments described above, but only by the following claims and their equivalents.

### The following is a list of further preferred embodiments of the invention:

Embodiment 1. A method to facilitate extraction of display objects for human-machine interface (HMI) displays, the method comprising:
   receiving a selection of a user-defined area that identifies at least a portion of a piping and instrumentation diagram (P&ID) associated with an industrial automation environment;
   analyzing the user-defined area of the P&ID to identify at least one object within the user-defined area of the P&ID;
   extracting the at least one object identified within the user-defined area of the P&ID to generate a static graphic object;
   receiving edit instructions that describe at least one modification to a visual appearance of the static graphic object; and
   applying the edit instructions to the static graphic object to generate an HMI graphic object comprising the at least one modification to the visual appearance of the static graphic object.
Embodiment 2. The method of embodiment 1 wherein analyzing the user-defined area of the P&ID to identify the at least one object within the user-defined area of the P&ID comprises analyzing the user-defined area of the P&ID using computer vision technology to identify the at least one object within the user-defined area of the P&ID.
Embodiment 3. The method of embodiment 1 wherein analyzing the user-defined area of the P&ID to identify the at least one object within the user-defined area of the P&ID comprises analyzing the user-defined area of the P&ID to identify at least one closed contour as the at least one object within the user-defined area of the P&ID.
Embodiment 4. The method of embodiment 1 wherein receiving the edit instructions that describe the at least one modification to the visual appearance of the static graphic object comprises receiving a selection of one or more graphic elements to remove from the static graphic object.
Embodiment 5. The method of embodiment 1 wherein receiving the edit instructions that describe the at least one modification to the visual appearance of the static graphic object comprises receiving a line width modification associated with the static graphic object.
Embodiment 6. The method of embodiment 1 wherein applying the edit instructions to the static graphic object to generate the HMI graphic object comprises applying the edit instructions to the static graphic object to generate the HMI graphic object in an image file format compatible with an HMI application.
Embodiment 7. The method of embodiment 1 wherein the HMI graphic object can be imported into an HMI application for inclusion on an HMI display.
Embodiment 8. One or more computer-readable storage media having program instructions stored thereon to facilitate extraction of display objects for human-machine interface (HMI) displays, wherein the program instructions, when executed by a computing system, direct the computing system to at least:
   receive a selection of a user-defined area that identifies at least a portion of a piping and instrumentation diagram (P&ID) associated with an industrial automation environment;
   analyze the user-defined area of the P&ID to identify at least one object within the user-defined area of the P&ID;
   extract the at least one object identified within the user-defined area of the P&ID to generate a static graphic object;
   receive edit instructions that describe at least one modification to a visual appearance of the static graphic object; and
   apply the edit instructions to the static graphic object to generate an HMI graphic object comprising the at least one modification to the visual appearance of the static graphic object.
Embodiment 9. The one or more computer-readable storage media of embodiment 8 wherein the program instructions direct the computing system to analyze the user-defined area of the P&ID to identify the at least one object within the user-defined area of the P&ID by directing the computing system to analyze the user-defined area of the P&ID using computer vision technology to identify the at least one object within the user-defined area of the P&ID.
Embodiment 10. The one or more computer-readable storage media of embodiment 8 wherein the program instructions direct the computing system to analyze the user-defined area of the P&ID to identify the at least one object within the user-defined area of the P&ID by directing the computing system to analyze the user-defined area of the P&ID to identify at least one closed contour as the at least one object within the user-defined area of the P&ID.
Embodiment 11. The one or more computer-readable storage media of embodiment 8 wherein the program instructions direct the computing system to receive the edit instructions that describe the at least one modification to the visual appearance of the static graphic object by directing the computing system to receive a selection of one or more graphic elements to remove from the static graphic object.
Embodiment 12. The one or more computer-readable storage media of embodiment 8 wherein the program instructions direct the computing system to receive the edit instructions that describe the at least one modification to the visual appearance of the static graphic object by directing the computing system to receive a line width modification associated with the static graphic object.
Embodiment 13. The one or more computer-readable storage media of embodiment 8 wherein the program instructions direct the computing system to apply the edit instructions to the static graphic object to generate the HMI graphic object by directing the computing system to apply the edit instructions to the static graphic object to generate the HMI graphic object in an image file format compatible with an HMI application.
Embodiment 14. The one or more computer-readable storage media of embodiment 8 wherein the HMI graphic object can be imported into an HMI application for inclusion on an HMI display.
Embodiment 15. An apparatus to facilitate extraction of display objects for human-machine interface (HMI) displays, the apparatus comprising:
   one or more computer-readable storage media;
   a processing system operatively coupled with the one or more computer-readable storage media; and
   program instructions stored on the one or more computer-readable storage media that, when executed by the processing system, direct the processing system to at least:
      receive a selection of a user-defined area that identifies at least a portion of a piping and instrumentation diagram (P&ID) associated with an industrial automation environment;
      analyze the user-defined area of the P&ID to identify at least one object within the user-defined area of the P&ID;
      extract the at least one object identified within the user-defined area of the P&ID to generate a static graphic object;
      receive edit instructions that describe at least one modification to a visual appearance of the static graphic object; and
      apply the edit instructions to the static graphic object to generate an HMI graphic object comprising the at least one modification to the visual appearance of the static graphic object.
Embodiment 16. The apparatus of embodiment 15 wherein the program instructions direct the processing system to analyze the user-defined area of the P&ID to identify the at least one object within the user-defined area of the P&ID by directing the processing system to analyze the user-defined area of the P&ID using computer vision technology to identify the at least one object within the user-defined area of the P&ID.
Embodiment 17. The apparatus of embodiment 15 wherein the program instructions direct the processing system to analyze the user-defined area of the P&ID to identify the at least one object within the user-defined area of the P&ID by directing the processing system to analyze the user-defined area of the P&ID to identify at least one closed contour as the at least one object within the user-defined area of the P&ID.
Embodiment 18. The apparatus of embodiment 15 wherein the program instructions direct the processing system to receive the edit instructions that describe the at least one modification to the visual appearance of the static graphic object by directing the processing system to receive a selection of one or more graphic elements to remove from the static graphic object.
Embodiment 19. The apparatus of embodiment 15 wherein the program instructions direct the processing system to receive the edit instructions that describe the at least one modification to the visual appearance of the static graphic object by directing the processing system to receive a line width modification associated with the static graphic object.
Embodiment 20. The apparatus of embodiment 15 wherein the program instructions direct the processing system to apply the edit instructions to the static graphic object to generate the HMI graphic object by directing the processing system to apply the edit instructions to the static graphic object to generate the HMI graphic object in an image file format compatible with an HMI application.

## Claims

1. A method to facilitate extraction of display objects for human-machine interface (HMI) displays, the method comprising:
receiving a selection of a user-defined area that identifies at least a portion of a piping and instrumentation diagram (P&ID) associated with an industrial automation environment;
analyzing the user-defined area of the P&ID to identify at least one object within the user-defined area of the P&ID;
extracting the at least one object identified within the user-defined area of the P&ID to generate a static graphic object;
receiving edit instructions that describe at least one modification to a visual appearance of the static graphic object; and
applying the edit instructions to the static graphic object to generate an HMI graphic object comprising the at least one modification to the visual appearance of the static graphic object.

2. The method of claim 1 wherein analyzing the user-defined area of the P&ID to identify the at least one object within the user-defined area of the P&ID comprises analyzing the user-defined area of the P&ID using computer vision technology to identify the at least one object within the user-defined area of the P&ID.

3. The method of claim 1 or 2 wherein analyzing the user-defined area of the P&ID to identify the at least one object within the user-defined area of the P&ID comprises analyzing the user-defined area of the P&ID to identify at least one closed contour as the at least one object within the user-defined area of the P&ID.

4. The method of one of claims 1 to 3 wherein receiving the edit instructions that describe the at least one modification to the visual appearance of the static graphic object comprises receiving a selection of one or more graphic elements to remove from the static graphic object; or
wherein receiving the edit instructions that describe the at least one modification to the visual appearance of the static graphic object comprises receiving a line width modification associated with the static graphic object.

5. The method of one of claims 1 to 4 wherein applying the edit instructions to the static graphic object to generate the HMI graphic object comprises applying the edit instructions to the static graphic object to generate the HMI graphic object in an image file format compatible with an HMI application.

6. The method of one of claims 1 to 5 wherein the HMI graphic object can be imported into an HMI application for inclusion on an HMI display.

7. One or more computer-readable storage media having program instructions stored thereon to facilitate extraction of display objects for human-machine interface (HMI) displays, wherein the program instructions, when executed by a computing system, direct the computing system to at least:
receive a selection of a user-defined area that identifies at least a portion of a piping and instrumentation diagram (P&ID) associated with an industrial automation environment;
analyze the user-defined area of the P&ID to identify at least one object within the user-defined area of the P&ID;
extract the at least one object identified within the user-defined area of the P&ID to generate a static graphic object;
receive edit instructions that describe at least one modification to a visual appearance of the static graphic object; and
apply the edit instructions to the static graphic object to generate an HMI graphic object comprising the at least one modification to the visual appearance of the static graphic object.

8. The one or more computer-readable storage media of claim 7 wherein the program instructions direct the computing system to analyze the user-defined area of the P&ID to identify the at least one object within the user-defined area of the P&ID by directing the computing system to analyze the user-defined area of the P&ID using computer vision technology to identify the at least one object within the user-defined area of the P&ID.

9. The one or more computer-readable storage media of claim 7 or 8 wherein the program instructions direct the computing system to analyze the user-defined area of the P&ID to identify the at least one object within the user-defined area of the P&ID by directing the computing system to analyze the user-defined area of the P&ID to identify at least one closed contour as the at least one object within the user-defined area of the P&ID.

10. The one or more computer-readable storage media of one of claims 7 to 9 wherein the program instructions direct the computing system to receive the edit instructions that describe the at least one modification to the visual appearance of the static graphic object by directing the computing system to receive a selection of one or more graphic elements to remove from the static graphic object.

11. The one or more computer-readable storage media of one of claims 7 to 10 wherein the program instructions direct the computing system to receive the edit instructions that describe the at least one modification to the visual appearance of the static graphic object by directing the computing system to receive a line width modification associated with the static graphic object; or
wherein the program instructions direct the computing system to apply the edit instructions to the static graphic object to generate the HMI graphic object by directing the computing system to apply the edit instructions to the static graphic object to generate the HMI graphic object in an image file format compatible with an HMI application.

12. The one or more computer-readable storage media of one of claims 7 to 11 wherein the HMI graphic object can be imported into an HMI application for inclusion on an HMI display.

13. An apparatus to facilitate extraction of display objects for human-machine interface (HMI) displays, the apparatus comprising:
one or more computer-readable storage media;
a processing system operatively coupled with the one or more computer-readable storage media; and
program instructions stored on the one or more computer-readable storage media that, when executed by the processing system, direct the processing system to at least:
receive a selection of a user-defined area that identifies at least a portion of a piping and instrumentation diagram (P&ID) associated with an industrial automation environment;
analyze the user-defined area of the P&ID to identify at least one object within the user-defined area of the P&ID;
extract the at least one object identified within the user-defined area of the P&ID to generate a static graphic object;
receive edit instructions that describe at least one modification to a visual appearance of the static graphic object; and
apply the edit instructions to the static graphic object to generate an HMI graphic object comprising the at least one modification to the visual appearance of the static graphic object.

14. The apparatus of claim 13 wherein the program instructions direct the processing system to analyze the user-defined area of the P&ID to identify the at least one object within the user-defined area of the P&ID by directing the processing system to analyze the user-defined area of the P&ID using computer vision technology to identify the at least one object within the user-defined area of the P&ID.

15. The apparatus of claim 13 or 14 wherein the program instructions direct the processing system to analyze the user-defined area of the P&ID to identify the at least one object within the user-defined area of the P&ID by directing the processing system to analyze the user-defined area of the P&ID to identify at least one closed contour as the at least one object within the user-defined area of the P&ID; or
wherein the program instructions direct the processing system to receive the edit instructions that describe the at least one modification to the visual appearance of the static graphic object by directing the processing system to receive a selection of one or more graphic elements to remove from the static graphic object; or
wherein the program instructions direct the processing system to receive the edit instructions that describe the at least one modification to the visual appearance of the static graphic object by directing the processing system to receive a line width modification associated with the static graphic object; or
wherein the program instructions direct the processing system to apply the edit instructions to the static graphic object to generate the HMI graphic object by directing the processing system to apply the edit instructions to the static graphic object to generate the HMI graphic object in an image file format compatible with an HMI application.
